Europäisches Patentamt

European Patent Office

Office européen des brevets

(11) Veröffentlichungsnummer : **0 033 388**
**B1**

(12) **EUROPÄISCHE PATENTSCHRIFT**

(45) Veröffentlichungstag der Patentschrift :
05.10.83

(51) Int. Cl.³ : **B 29 D 7/24**, B 65 H 23/02,
**D 06 C 3/06**

(21) Anmeldenummer : 80108121.7

(22) Anmeldetag : 22.12.80

(54) Vorrichtung zum Breitstrecken und/oder Breithalten von durchlaufenden Materialbahnen.

(30) Priorität : 31.01.80 DE 3004303

(43) Veröffentlichungstag der Anmeldung :
12.08.81 Patentblatt 81/32

(45) Bekanntmachung des Hinweises auf die Patenterteilung : 05.10.83 Patentblatt 83/40

(84) Benannte Vertragsstaaten :
AT BE CH DE FR GB IT LI LU NL SE

(56) Entgegenhaltungen :
AT B 326 601
DE A 1 460 639
DE A 1 504 647
DE A 1 635 253
DE A 1 963 248
DE A 2 049 817
DE U 7 618 523
GB A 790 212

(73) Patentinhaber : Ramisch Kleinewefers GmbH
Neuer Weg 24-40
D-4150 Krefeld (DE)

(72) Erfinder : Friz, Werner, Ing.grad.
Buschdonk 1
D-4150 Krefeld (DE)

(74) Vertreter : Stark, Walter, Dr.-Ing.
Moerser Strasse 140
D-4150 Krefeld (DE)

Vorrichtung zum Breitstrecken und/oder Breithalten von durchlaufenden Materialbahnen

Die Erfindung betrifft eine Vorrichtung zum Breitstrecken und/oder Breithalten von durchlaufenden Materialbahnen mit einem um eine feste Achse drehbaren Rohrkörper, der an seinem Umfang mehrere zueinander parallele axiale Nuten aufweist, in die elastische Schnüre eingezogen sind, welche an Spannscheiben an den Enden des Rohrkörpers gehalten sind, wobei wenigstens eine der Spannscheiben in eine Schräglage zur festen Achse verstellbar und in dieser Schräglage unabhängig von der Rotation des Rohrkörpers feststellbar ist.

Derartige Vorrichtungen sind bekannt (AT-B-326 601, DE-A-14 60 639, DE-U-76 18 523). Sie werden zur Behandlung von Bahnen aus textilem oder Kunststoffmaterial eingesetzt. Die Materialbahn umschlingt den Rohrkörper, über dessen Oberfläche die Schnüre teilweise vorstehen. Die Enden der Schnüre sind an den Spannscheiben gehalten, die als Taumelscheiben ausgebildet sind. Dadurch verändert sich bei der Rotation des Rohrkörpers mit oder ohne Antrieb die Länge der Schnüre stetig, wobei sie sich während jedes Umlaufs einmal verkürzen und einmal verlängern. Wird die Materialbahn über einen Umfangsabschnitt geführt, auf dem sich die Länge der Schnüre vergrößert, dann wird bei entsprechenden Haftkräften zwischen Materialbahn und Schnüren die Breite der Materialbahn vergrößert. Bei geringeren Haftkräften ist es zumindest möglich, die Materialbahn breitzuhalten oder Falten auszugleichen.

Man hat derartige Vorrichtungen auch schon eingesetzt, um Kunststoffolien, die bis in den Bereich der Erweichungstemperatur erwärmt wurden, zu breiten. Dabei ergaben sich aber Schwierigkeiten im Hinblick auf die Temperaturbeständigkeit und Dauerwechselfestigkeit des Schnurmaterials einerseits sowie im Hinblick auf die notwendige Haftung zwischen Kunststoffmaterial und Schnurmaterial andererseits. Um die Haftung zu verbessern, ist es bekannt, gegenüber dem Folieneinlauf einer solchen, auch Breitstreckwalze genannten vorrichtung eine Ionisierungskammer anzuordnen, die zwischen der Kunststoffolie und einem dielektrischen Mantel des metallenen und geerdeten Rohrkörpers ein elektrostatisches Feld erzeugt, welches elektrostatische Haftkräfte liefert. Dadurch wird die Vorrichtung insgesamt aber sehr schwer und unhandlich.

Aufgabe der Erfindung ist es, bei einer Vorrichtung der eingangs beschriebenen Gattung die Temperaturbeständigkeit und Dauerwechselfestigkeit der elastischen Schnüre zu verbessern sowie die Konstruktion im Hinblick auf die Erzeugung hinreichender Haftkräfte zu vereinfachen.

Diese Aufgabe wird dadurch gelöst, daß die elastischen Schnüre eine geerdete Einlage aus elektrisch leitfähigem Material aufweisen und daß der Rohrkörper aus einem elektrisch nicht leitenden Material besteht.

Im Rahmen der Erfindung kann auf einen verhältnismäßig schweren und unhandlichen metallenen Rohrkörper verzichtet werden und kann dieser Rohrkörper aus Kunststoffmaterial ausgeführt werden, wenn nur sichergestellt ist, daß im Bereich der Schnüre elektrische Leiter angeordnet sind, die bei entsprechender Erdung sich für den Aufbau eines elektrostatischen Feldes eignen, welches elektrostatische Haftkräfte zwischen Kunststoffolie und den im übrigen aus einem dielektrischen Material bestehenden Schnüren liefert.

Besonders vorteilhaft ist eine Ausführungsform, bei der die Schnüre aus einem Mischpolymerisat aus Acryl-Nitryl, Butadien und Styrol (ABS) mit einer Einlage aus feinverteiltem Graphit bestehen. Derartige Schnüre lassen sich leicht herstellen und gut verarbeiten. Sie besitzen neben einer hinreichenden Temperaturbeständigkeit bis ca. 100 °C auch die gewünschte Dauerwechselfestigkeit, die auf die Einlage aus Graphit zurückgeführt wird. Die Einlage aus Graphit sorgt darüber hinaus aber auch für die elektrische Leitfähigkeit beim Aufbau eines elektrostatischen Feldes.

Eine andere Möglichkeit besteht darin, die elastischen Schnüre aus metallischen Spiralfedern und einem umgebenden Mantel aus einem temperaturbeständigen, weichelastischen Material herzustellen. Der Mantel kann aus einem PTFE- oder einem Gummimaterial bestehen. Die metallische Spiralfeder, insbesondere Stahlfeder, gewährleistet die gewünschte Dauerwechselfestigkeit und die Voraussetzungen für den Aufbau des elektrostatischen Feldes, während der bis über 100 °C temperaturbeständige Mantel Markierungen der Spiralfeder auf der Materialbahn, insbesondere Kunststoffolie, verhindert.

Eine solche Vorrichtung wird normalerweise als Schleppwalze ausgeführt, wenn sie als Breithalter oder Breitstreckwalze eingesetzt ist. Der Umschlingungswinkel der Materialbahn sollte zwischen 120° und 160° liegen.

Im folgenden werden in der Zeichnung dargestellte Ausführungsbeispiele der Erfindung erläutert ; es zeigen :

Figur 1 in schematischer Darstellung einen Längsschnitt durch eine Vorrichtung zum Recken und/oder zum Normalisieren des Reckverhältnisses von thermoplastischen Kunststoffolien,

Figur 2 eine andere Ausführungsform des Gegenstandes nach Fig. 1,

Figur 3 in schematischer Darstellung eine Ansicht einer Breitstreckwalze,

Figur 4 einen Schnitt in Richtung IV-IV durch den Gegenstand nach Fig. 3,

Figur 5 in vergrößerter Darstellung und teilweise geschnitten einen Endabschnitt der Breitstreckwalze nach Fig. 3,

Figur 6 teilweise geschnitten einen Abschnitt einer elastischen Schnur für die Breitstreckwalze nach Fig. 3,

Figur 7 eine andere Ausführungsform des Gegenstandes nach Fig. 6.

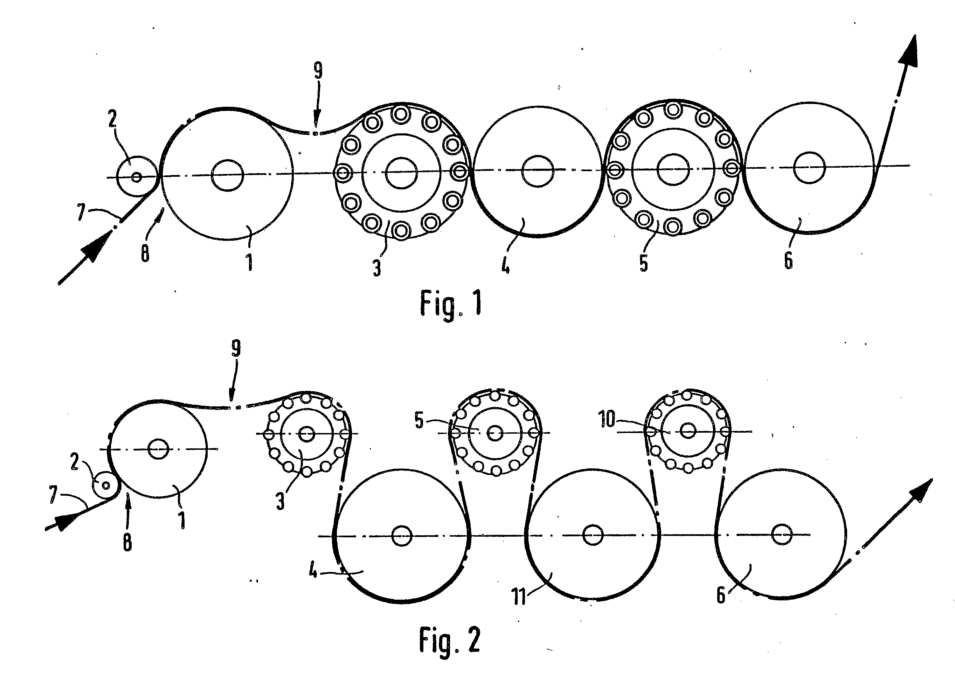

Die in Fig. 1 dargestellte Vorrichtung besteht in ihrem grundsätzlichen Aufbau aus einer Reihe von hintereinandergeschalteten parallelachsigen Walzen, deren Achsen jeweils in einer Ebene liegen. Im einzelnen handelt es sich dabei um eine Temperierwalze 1 mit vorgeschalteter Andruckrolle 2, einer Breitstreckwalze 3, einer dieser nachgeschalteten Heizwalze 4, einer weiteren Breitstreckwalze 5 und einer dieser nachgeschalteten Kühlwalze 6. Es können auch mehrere der dargestellten Walzen einzeln oder gruppenweise mehrfach hintereinander angeordnet sein.

Eine von einem Ziehkalander oder einem Wickel abgezogene Kunststoffolie 7 wird von unten durch den Spalt 8 zwischen Temperierwalze 1 und Andruckrolle 2 über die Oberseite der Temperierwalze 1 und von dort unter Bildung eines Durchhangs 9 auf die Oberseite der Breitstreckwalze 3 geführt. Die Kunststoffolie 7 gelangt von der Breitstreckwalze 3 auf die Unterseite der Heizwalze 4 und dann wieder auf die Oberseite der nachfolgenden Breitstreckwalze 5, von der die Kunststoffolie 7 an die nachgeschaltete Kühlwalze 6 übergeben wird, über deren Unterseite sie zu einer nicht dargestellten Wickelvorrichtung oder dergleichen geführt wird.

Beim Durchlauf der Kunststoffolie durch die Vorrichtung soll das Reckverhältnis der Kunststoffolie normalisiert werden, weil die vom Ziehkalander heiß abgezogene und über nachfolgende Temperier- und Kühlwalzen geführte Kunststoffolie stets Längsreckungen aufweist, die bei der weiteren Veredelung der Folie erhebliche Schwierigkeiten bereiten, insbesondere dann, wenn von den Fertigprodukten vorgeschriebene Qualitätsgarantien im Hinblick auf Dimensionsveränderungen unter definierter Wärmeeinwirkung verlangt werden. Beim Durchlauf durch die dargestellte Vorrichtung kann der Kunststoffolie, die im wesentlichen mit axialer Reckung längsorientiert ist, eine Querorientierung mit entsprechender Reckung überlagert werden, so daß das Reckverhältnis normalisiert und/oder die axiale Reckung eliminiert wird.

Dazu wird die Kunststoffolie 7 auf der Temperierwalze 1 auf eine exakt vorgegebene Temperatur im thermoplastischen Bereich aufgeheizt. Die Temperierwalze 1 ist, was im einzelnen nicht dargestellt ist, mit einem Heizmedium wie z. B. Heißwasser oder Heißöl innenseitig durchströmt und gibt ihre Wärme über die Oberfläche an die Kunststoffolie 7 ab.

Da die Kunststoffolie 7, wenn sie die Temperierwalze 1 verläßt, sich im thermoplastischen Zustand befindet, bildet sich aufgrund ihres Eigengewichtes der Durchhang 9 aus.

Auf der nachfolgenden Breitstreckwalze 3, deren Aufbau im einzelnen weiter unten erläutert werden wird, wird die Kunststoffolie 7 auf ihrem Umschlingungsweg von weniger als 180° zwischen Einlauf und Auslauf progressiv und definiert um einen bestimmten Betrag in Querrichtung gestreckt. Wenn man davon ausgeht, daß die Fläche der Kunststoffolie 7 beim Breitstrecken konstant bleibt, dann ändert sich ihre Länge bzw. die bei den vorangehenden Bearbeitungsvorgängen entstandene Längsstreckung.

Um eine weitere Längsstreckung zu vermeiden, werden die der Breitstreckwalze 3 nachgeschalteten Walzen mit einer entsprechend geringeren Geschwindigkeit angetrieben. Es versteht sich, daß diese kinematischen Verhältnisse auch für alle Walzen gelten, die einer weiteren Breitstreckwalze, z. B. der Breitstreckwalze 5, nachgeschaltet sind. Die Einstellung der Drehzahlen dieser Walzen erfolgt mit Hilfe nicht dargestellter Steuer- oder Regelkreise oder Getriebe.

Die der Breitstreckwalze 3 nachgeschaltete Heizwalze 4 wird mit einem zirkulierenden Heizmedium wie Heißwasser oder Heißöl innenseitig durchströmt und gibt ihre Wärme über die Oberfläche an die Kunststoffolie 7 ab. Die Temperatur der Heizwalze 4 ist geringer eingestellt als die Temperatur der Temperierwalze 1, so daß die auf der Breitwalze 3 erreichte Breitstreckung der Kunststoffolie 7 im Bereich der Heizwalze 4 praktisch eingefroren wird. Es besteht aber auch die Möglichkeit, die Temperatur der Heizwalze 4 so zu steuern, daß den nachfolgenden Walzen eine Kunststoffolie im halbelastischen Bereich übergeben wird, die in der Lage ist, die durch diese nachgeschalteten Walzen erzeugten Längskräfte aufzunehmen bzw. auszugleichen.

Beim dargestellten Ausführungsbeispiel wird die Kunststoffolie 7 noch einmal über eine Breitstreckwalze 5 geführt, um verbleibende Restdehnungen auszugleichen und das Reckverhältnis optimal einzustellen. Im Bereich der Kühlwalze 6 schließlich wird die Kunststoffolie 7 abgekühlt, so daß der erhaltene Reckzustand praktisch eingefroren wird. Anschließend kann die Folie aufgewickelt werden. Wenn mehrere Gruppen von Temperierwalzen, Heizwalzen und Kühlwalzen vorgesehen sind, sollte die Möglichkeit bestehen, die Temperatur dieser Walzen gruppenweise oder einzeln unabhängig voneinander einzustellen. Um eine Anpassung an unterschiedliche Eigenschaften verschiedener Folien zu ermöglichen, sollten auch die Drehzahlen der angetriebenen Walzen gruppenweise oder einzeln regelbar sein.

Bei der in Fig. 1 dargestellten Vorrichtung sind die Achsen sämtlicher Walzen in einer Ebene angeordnet, wobei Breitsteckwalzen und Heizwalzen so dicht nebeneinander angeordnet sind, daß zwischen ihnen lediglich ein den Durchtritt der Kunststoffolie 7 ermöglichender Spalt verbleibt.

Bei der in Fig. 2 dargestellten Vorrichtung bezeichnen gleiche Bezugzeichen gleiche Teile. Hier sind die Walzen gruppenweise in unterschiedlichen Ebenen angeordnet. Insgesamt sind drei Breitstreckwalzen 3, 5 und 10 in einer Ebene oberhalb der beiden Heizwalzen 4 und 11 sowie

der Kühlwalze 6 angeordnet. Das bietet die Möglichkeit, den Umschlingungswinkel der Kunststoffolie 7 auf diesen Walzen zu vergrößern.

Mit den beschriebenen Vorrichtungen ist es ohne weiteres möglich, die Kunststoffolie so zu behandeln, daß sie nach Verlassen der Walzen ein bestimmtes vorgegebenes Reckverhältnis mit überwiegender Längsreckung oder überwiegender Querreckung besitzt. Dazu ist es lediglich erforderlich, die angetriebenen Walzen, z. B. die Heizwalzen 4, 11 und die Kühlwalze 6 so anzutreiben, daß zusätzlich Längskräfte in die Kunststoffolie eingebracht werden. Das ist mit den vorhandenen Regel- und Steuereinrichtungen möglich.

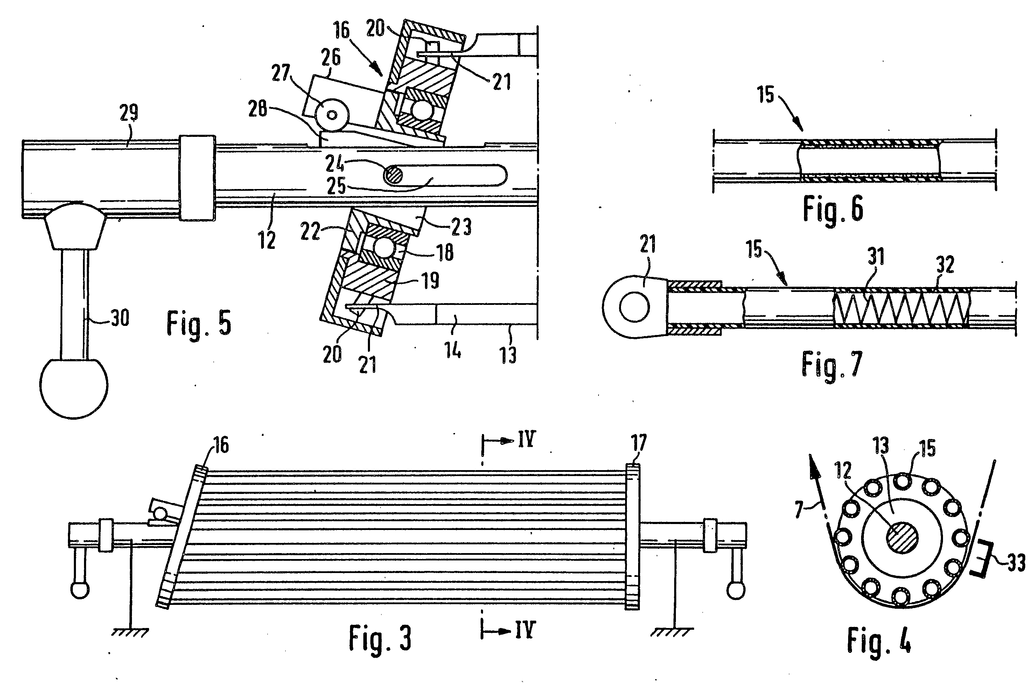

Die in den Figuren 3 bis 7 dargestellte Breitstreckwalze 3 besteht in ihrem grundsätzlichen Aufbau aus einem um eine feste Welle 12 drehbaren Rohrkörper 13, der an seinem Umfang mehrere zueinander parallele axiale Nuten 14 aufweist, in die elastische Schnüre 15 eingezogen sind. Die Nuten 14 besitzen ein hinterschnittenes Profil, so daß die Schnüre 15 auch bei hohen Drehzahlen des Rohrkörpers 13 und bei den dann auftretenden Zentrifugalkräften nicht aus den Nuten 14 austreten können. Andererseits ist die Anordnung der Schnüre in den Nuten 14 aber so, daß die Schnüre 15 zumindest teilweise über die Oberfläche des Rohrkörpers 13 vorstehen (Fig. 4).

An jedem Ende des Rohrkörpers 13 ist auf der Welle 12 jeweils eine Spannscheibe 16, 17 gelagert. Die Spannscheiben 16, 17 sind identisch ausgebildet, so daß es genügt, eine zu beschreiben. Jede Spannscheibe 16 bzw. 17 weist einen mit seiner Innenseite auf einem Kugellager 18 laufenden Ring 19 auf, der außenseitig mehrere radial vorstehende Zapfen 20 trägt. Die Anzahl der Zapfen 20 entspricht der Anzahl der Nuten 14. Auf die Zapfen 20 sind beim dargestellten Ausführungsbeispiel Ösen 21 an den Enden der elastischen Schnüre 15 aufgeschoben. Die elastischen Schnüre 15 können aber auch zu einer einzigen durchgehenden Schnur vereinigt sein, die abwechselnd von links nach rechts und wieder zurück über den Mantel des Rohrkörpers 13 und um die Zapfen 20 herumgeführt ist.

Das Kugellager 18 sitzt innenseitig auf einem Laufkranz 22, der eine Durchgangsöffnung 23 für die Welle 12 besitzt. Die Durchgangsöffnung 23 ist erheblich größer als der Durchmesser der Welle 12, so daß der Laufkranz 22 relativ zur Welle 12 wie dargestellt verschwenkt werden kann. Die Durchgangsöffnung 23 ist von einem Schwenkzapfen 24 durchsetzt, der sich durch einen Längsschlitz 25 der Welle 12 erstreckt. Ferner besitzt der Laufkranz 22 einen Arm 26, der in Längsrichtung der Welle 12 nach außen vorspringt und eine Gleitrolle 27 trägt. Im Bereich der Gleitrolle 27 befindet sich auf der Welle 12 und mit dieser fest verbunden ein Keil 28.

Der Schwenkzapfen 24 sitzt am Ende einer nicht dargestellten, innerhalb der Welle 12 in Längsrichtung geführten Spindel, die sich bis in eine am Ende der Welle 12 axial unverschieblich, jedoch drehbar gehaltene Spindelmutter 29 erstreckt. Ein Handgriff 30 an der Spindelmutter 29 ermöglicht die axiale Verstellung der Spindel und damit des Schwenkzapfens 24. Mit dem Schwenkzapfen 24 wird auch der Laufkranz 22 in axialer Richtung verstellt, wobei der Arm 26 mit der Gleitrolle 27 sich auf dem Keil 28 abstützt. Je nach Verstellung wird dadurch eine Verschwenkung der Spannscheibe 16 erreicht.

Beim dargestellten Ausführungsbeispiel besteht der Rohrkörper 13 aus einem elektrisch nicht leitendem Material. Die elastischen Schnüre 15 können entweder aus einem Mischpolymerisat aus Acryl-Nitryl, Butadien und Styrol (ABS) mit einer Einlage aus feinverteiltem Graphit (Fig. 6) oder aus metallischen Spiralfedern 31 und einem umgebenden Mantel 32 aus temperaturbeständigem weichelastischem PTFE- bzw. einem Gummimaterial bestehen (Fig. 7). Die verwendeten Materialien sind bis ca. 100 °C und darüber temperaturbeständig und dauerelastisch.

Die Einlage aus feinverteiltem Graphit bei den Schnüren aus Mischpolymerisat soll nicht nur die mechanischen Eigenschaften verbessern sondern auch, ebenso wie die Einlage aus metallischen Spiralfedern 31, elektrische Leitfähigkeit gewährleisten. Elektrische Leitfähigkeit ist immer dann erwünscht, wenn zusätzliche Haltekräfte zwischen der Folie und der Breitstreckwalze erforderlich sind. Dazu wird die Folie vor dem Einlauf in die Breitstreckwalze an einer Ionisierungseinrichtung 33 vorbeigeführt, die bei geerdeten elektrischen Leitern eine elektrostatische Aufladung mit dem Ergebnis bewirkt, daß die Kunststoffolie 7 auf der Breitstreckwalze zusätzlich durch elektrostatische Kräfte gehalten wird. Dann kann die Breitstreckwalze im Rahmen der eingangs beschriebenen Vorrichtung als Schleppwalze angeordnet sein, ohne daß die Kunststoffolie durch nennenswerte Längskräfte belastet wird.

Es versteht sich, daß die Breitstreckwalze auch unabhängig von der beschriebenen Vorrichtung zum Breithalten oder Breiten von durchlaufenden Materialbahnen eingesetzt werden kann.

**Ansprüche**

1. Vorrichtung zum Breitstrecken und/oder Breithalten von durchlaufenden Materialbahnen mit einem um eine feste Achse (12) drehbaren Rohrkörper (13), der an seinem Umfang mehrere zueinander parallele axiale Nuten (14) aufweist, in die elastische Schnüre (15) eingezogen sind, welche an Spannscheiben (16, 17) an den Enden des Rohrkörpers (13) gehalten sind, wobei wenigstens eine der Spannscheiben (16) in eine Schräglage zur festen Achse (12) verstellbar und in dieser Schräglage unabhängig von der Rotation des Rohrkörpers (13) feststellbar ist, dadurch gekennzeichnet, daß die elastischen Schnüre (15) eine geerdete Einlage aus elektrisch leitfähigem Material aufweisen und daß der Rohrkörper (13) aus einem elektrisch nicht leitenden Material besteht.

2. Vorrichtung nach Anspruch 1, dadurch gekennzeichnet, daß die Schnüre (15) aus einem Mischpolymerisat aus Acryl-Nitryl, Butadien und Styrol (ABS) mit einer Einlage aus feinverteiltem Graphit bestehen.

3. Vorrichtung nach Anspruch 1, dadurch gekennzeichnet, daß die elastischen Schnüre (15) aus metallischen Spiralfedern (31) und einem umgebenden Mantel (32) aus einem temperaturbeständigen, weichelastischen Material bestehen.

4. Vorrichtung nach Anspruch 3, dadurch gekennzeichnet, daß der Mantel (32) aus einem PTFE-Material besteht.

5. Vorrichtung nach Anspruch 3, dadurch gekennzeichnet, daß der Mantel (32) aus einem Gummimaterial besteht.

## Claims

1. Apparatus for expanding and/or maintaining the expansion of a moving web, comprising a tubular member (13) rotatable about a fixed axis (12) and provided with a plurality of axially-extending, peripheral parallel grooves (14), resilient cords (15) being arranged in the grooves and being held on tensioning discs (16, 17) at the ends of the tubular member (13), at least one of the tensioning discs (16) being adjustable into an oblique position relative to the fixed axis (12) and being fixable in this oblique position independently of the rotation of the tubular member (13), characterized in that the resilient cords (15) comprise an earthed insert of electrically-conductive material and the tubular member (13) is formed of an electrically non-conductive material.

2. Apparatus according to Claim 1, characterized in that the cords (15) consist of a copolymer of acrylonitryl, butadiene and styrene (ABS) with an insert of finely distributed graphite.

3. Apparatus according to Claim 1, characterized in that the resilient cords (15) comprise metal helical springs (31) and a surrounding cover (32) of a temperature-resistant, softly-resilient material.

4. Apparatus according to Claim 3, characterized in that the cover (32) consists of a PTFE material.

5. Apparatus according to Claim 3, characterized in that the cover (32) consists of a rubber material.

## Revendications

1. Dispositif pour élargir et/ou pour maintenir la tension de bandes en mouvement, comportant un corps tubulaire (13) pouvant tourner autour d'un axe fixe (12) et présentant à sa circonférence plusieurs rainures axiales (14) parallèles entre elles, dans lesquelles sont insérés des cordons élastiques (15), qui sont retenus sur des disques tendeurs (16, 17) aux extrémités du corps tubulaire (13), au moins un des disques tendeurs (16) pouvant être réglé à une position oblique relativement à l'axe fixe (12), et pouvant être fixé dans cette position oblique indépendamment de la rotation du corps tubulaire (13), caractérisé en ce que les cordons élastiques (15) présentent un doublage intérieur en matière conductrice de l'électricité, relié à la terre, et en ce que le corps tubulaire (13) est formé d'une matière non conductrice de l'électricité.

2. Dispositif selon la revendication 1, caractérisé en ce que les cordons (15) sont formés d'un produit de copolymérisation d'acrylonitrile, de butadiène et de styrène (ABS) présentant un doublage intérieur de graphite finement divisé.

3. Dispositif selon la revendication 1, caractérisé en ce que les cordons élastiques (15) sont formés de ressorts à boudin métalliques (31) et d'une enveloppe (32) en matière souple résistant à la température, qui les entoure.

4. Dispositif selon la revendication 3, caractérisé en ce que l'enveloppe est formée d'un polytétrafluoréthylène.

5. Dispositif selon la revendication 3, caractérisé en ce que l'enveloppe (32) est formée d'un caoutchouc.

Fig. 1

Fig. 2

Fig. 5

Fig. 6

Fig. 7

Fig. 3

Fig. 4